# EUROPÄISCHE PATENTANMELDUNG

(11) **EP 3 939 729 A1**
(43) Veröffentlichungstag der Anmeldung: **19.01.2022**
(21) Anmeldenummer: 21184471.7
(22) Anmeldetag: 08.07.2021
(51) Int. Cl.: B23D 61/02

(54) **SÄGEBLATT, INSBESONDERE KREISSÄGEBLATT, MIT EINER CODIERUNG**

(30) Priorität: 13.07.2020 DE 102020118453
(71) Anmelder: Albert Knebel GmbH & Co. KG Holding, 72336 Balingen (DE)
(72) Erfinder: Knebel, Alexander, 72379 Hechingen (DE)
(74) Vertreter: Mertzlufft-Paufler, Cornelius

(57) **Zusammenfassung**

Die Erfindung betrifft ein Sägeblatt (1), insbesondere Kreissägeblatt, mit einer Codierung (7, 8) oder dergleichen Datenträger, wobei das Sägeblatt (1) an zumindest einer Seite eine Vertiefung (6, 9) aufweist, welche zur Kompensation einer Unwucht eingebracht wurde, in der die Codierung (7, 8) oder dergleichen Datenträger angeordnet ist (vgl. Fig. 1).

## Beschreibung

Es ist bekannt, Sägeblätter mit einer Codierung zu versehen. Beispielsweise können Sägeblätter mit einer Seriennummer oder einem Chip codiert werden. Problematisch ist, dass diese Codierungen erst am Ende der Herstellung eines Sägeblatts angebracht werden können, da während der Sägeblattherstellung ein Sägeblattrohling unterschiedlichen Bearbeitungsprozessen unterworfen wird, die eine Codierung wieder entfernen oder beschädigen. Beispielsweise kann eine aufgedruckte Seriennummer oder auch eine gravierte Seriennummer in nachfolgenden Fertigungsprozessen wieder entfernt werden. Ein Chip kann beispielsweise keine Wärmebehandlung überstehen, wie dies beim Anlassen beispielsweise der Fall ist. Selbst gegen Ende der Sägeblattherstellung gibt es Prozesse, die ein vorangestelltes Verbauen eines Chips unmöglich machen, wie zum Beispiel das Aufbringen einer Verschleißschutzschicht, welches ebenfalls unter hohen Temperaturen durchgeführt wird, aber erst nachdem die Säge bereits geschliffen, also ansonsten komplett fertigbearbeitet ist. Daher ist es nicht möglich, einen Sägeblattrohling schon zu Beginn der Herstellung des Sägeblatts zu codieren, sodass auch die Sägeblattherstellung nicht über die Codierung gesteuert bzw. für die Qualitätskontrolle verwendet werden kann.

Selbst wenn eine Codierung erst gegen Ende der Sägeblattherstellung aufgebracht wird, besteht das Problem, dass auch im Betrieb des Sägeblatts die Codierung entfernt wird. Beispielsweise kann sich eine Codierung, die außerhalb des Flanschbereichs des Sägeblatts angebracht ist, im Betrieb abnutzen. Es ist jedoch wünschenswert, dass die Codierung außerhalb des Flanschbereichs angeordnet ist, damit diese im eingebauten Zustand gelesen werden kann.

Aufgabe der vorliegenden Erfindung ist es daher, ein Sägeblatt mit einer Codierung bereitzustellen, mit dem die oben beschriebenen Nachteile vermieden werden.

Gelöst wird diese Aufgabe erfindungsgemäß durch ein Sägeblatt, insbesondere Kreissägeblatt, mit einem Datenträger, insbesondere einer Codierung, wobei das Sägeblatt an zumindest einer Seite eine Vertiefung aufweist, in der der Datenträger, insbesondere die Codierung, angeordnet ist. Die Codierung kann dabei mittels Laser eingebracht sein. Die Codierung kann in die Vertiefung gedruckt sein. Die Codierung kann als QR-Code, Barcode oder Datamatrix Code oder dgl. ausgebildet sein. Dadurch, dass die Codierung in einer Vertiefung des Sägeblatts eingebracht wird, kann diese nicht bei einer mechanischen Bearbeitung der Seitenflächen wie z.B. dem Polieren des Sägeblatts während dessen Herstellung entfernt werden. Somit ist es möglich, Qualitätsdaten auf ein einzelnes Sägeblatt zu beziehen. Es ist nachvollziehbar, wann welcher Folge-Arbeitsschritt an dem Sägeblatt durchgeführt wurde. Beispielsweise sind Daten zurückschreibbar nach jedem Arbeitsgang, wenn der Datenträger beschreibbar oder veränderlich ausgebildet ist. Über jedes gemessene und geprüfte Sägeblatt kann ein Protokoll erstellt werden. Außerdem kann anhand der Codierung bzw. Serialisierung ein Sägeblatt eindeutig identifiziert werden. Eine Rückverfolgung ist möglich. Auch beim Beladen einer Maschine, d. h. dem Montieren eines Werkzeugs in einer Werkzeugmaschine, kann die Codierung erfasst werden und die Maschine beispielsweise entsprechend parametriert werden. Auch im Betrieb des Sägeblatts bleibt die Codierung erhalten und kann ohne Ausbau gelesen werden.

Erfindungsgemäß wird die Vertiefung jedoch nicht ausschließlich auf Grundlage der Erreichbarkeit und Nutzbarkeit des darin enthaltenen Datenträgers eingebracht.

Die Vertiefung wird so eingebracht damit sie einer im Sägengrundkörper bestehenden Unwucht entgegenwirkt. Durch das Laserschneiden oder andere Trennverfahren zur Herstellung des Sägengrundkörpers aus Stahlblech entsteht trotz wuchtfreier Konstruktion stets eine Unwucht, welche sich aus den Prozessschwankungen der Fertigungsverfahren ergibt. Dies hat den entscheidenden Vorteil, dass die aus dem Stand der Technik bekannte Art des Wuchtens, nämlich das Abtragen von Material an einzelnen Zahnträgern im besten Fall entfällt, zumindest aber deutlich geringer ausfällt. Das Eliminieren einer Unwucht durch das Einbringen der Vertiefung ist nicht nur deutlich wirtschaftlicher zu realisieren, sondern auch weniger schädlich für die Funktionalität und Lebensdauer des Sägeblatts. Das Verringern der Materialstärke von einzelnen Zahnträgern kann in so hohem Maße erforderlich sein, dass ein Einsatz des Sägeblatts aus Sicherheitsgründen nicht mehr möglich ist, da ansonsten die Zahnträger brechen könnten und diese somit für erheblichen Sach- oder sogar Personenschaden sorgen könnten.

Die Vertiefung kann an zumindest einer Stelle eine Tiefe von mindestens 0,2 mm gemessen von der Sägeblattoberseite aufweisen. Dadurch kann sichergestellt werden, dass die Codierung während der Herstellung aber auch während des Betriebs des Sägeblatts sicher an dem Sägeblatt verbleibt und nicht entfernt wird.

Die Vertiefung kann einen Querschnitt mit einem gebogenen Abschnitt aufweisen. Beispielsweise kann die Vertiefung einen kreisrunden Umfang aufweisen. Weiterhin ist es denkbar, dass die Vertiefung abgerundete Ecken aufweist. Somit ist es besonders einfach möglich, die Vertiefung mittels eines Fräsers einzubringen.

Die Vertiefung kann eine gleichbleibende Tiefe aufweisen. Es ist jedoch auch denkbar, dass die Vertiefung wannenartig ausgebildet ist. Somit könnte die Vertiefung beispielsweise ausgebildet werden, indem ein Fräser während einer Bewegung parallel zur Oberseite des Sägeblatts kurzzeitig in das Material des Sägeblatts eintaucht.

Die Größe der Vertiefung sollte möglichst klein gewählt werden, um möglichst geringe mechanische Veränderungen an dem Sägeblatt vorzunehmen. Dabei kann vorgesehen sein, dass die Fläche des Querschnitts der Vertiefung höchstens doppelt so groß ist wie die von der Codierung beanspruchte Fläche. Durch die korrekte Wahl des Verhältnisses von Tiefe und Fläche der Vertiefung kann verhindert werden, dass Schleif- und Polierscheiben bei der Bearbeitung der Seitenflächen des Sägeblatts, die Grundfläche oder den Vertiefungsgrund der Vertiefung erreichen können und somit die aufgebrachte Codierung auch in solchen Arbeitsgängen erhalten bleibt. Üblicherweise auftretende Unwuchtwerte am Sägengrundkörper, können hiermit in der Regel bereits vollständig behoben, zumindest aber so sehr reduziert werden, dass der zusätzliche Abtrag an den Zahnträgern weder wirtschaftlich kritisch für den Herstellungsprozess noch sicherheitstechnisch relevant für den Anwendungsfall ist.

Wenn die Codierung vor einer, insbesondere vor der ersten, Schleif- oder Polierbearbeitung eingebracht wird, können auch nachfolgende Bearbeitungsschritte eindeutig dem herzustellenden Sägeblatt zugeordnet werden. Insbesondere kann dadurch möglicherweise nachvollzogen werden, welcher Bearbeitungsschritt fehlerhaft durchgeführt wurde, wenn das Sägeblatt als Ausschuss charakterisiert wird.

Der Sägeblattrohling kann mechanisch bearbeitet werden, insbesondere geschliffen und/oder poliert werden. Dabei kann vorgesehen sein, dass durch die mechanische Bearbeitung nur so wenig Material abgetragen wird, dass die Vertiefung erhalten und die Codierung in der Vertiefung lesbar bleibt.

Um für den Dauereinsatz des Sägeblatts eine möglichst lange Lesbarkeit der Codierung zu erhalten, kann außerdem vorgesehen sein, dass die Vertiefung mit einer insbesondere transparenten Schutzschicht versiegelt wird. Diese Schutzschicht kann zum Beispiel aus Polysiloxan oder Polyesteracrylat bestehen. Ebenso können andere geeignete Substrate zum Einsatz kommen die in flüssiger, zäh- oder dickflüssiger oder auch klebriger Form in die Vertiefung eingebracht werden und dort dann aushärten bzw. trocknen. Die Vertiefung kann hierbei bis auf gleiche Höhe zur Stammblattoberseite komplett gefüllt werden. In einer Variante dieser Schutzschicht kann vorgesehen sein, dass eine feste Einlage verwendet wird, deren Durchmesser in etwa (dem Durchmesser) der Vertiefung im Sägeblatt entspricht und dessen Höhe in etwa (der Tiefe) der Vertiefung im Sägeblatt entspricht. Diese Einlage kann dann mittels geeigneter stoff- oder kraftschlüssiger Verfahren in der Vertiefung eingebracht werden. Für die Einlage können die gleichen Stoffe zum Einsatz kommen wie bei der "flüssigen" Version der Schutzschicht, es können aber auch andere geeignete makromolekulare siliziumorganische Verbindungen wie Kalk-Natron-Glas oder Verbunde davon, zum Einsatz kommen. In diesem Fall wird bei der Gestaltung der Vertiefung bereits das wieder einzubringende Gewicht berücksichtigt, um die Unwucht des Sägengrundkörpers zu beseitigen, zumindest aber diese deutlich zu verringern.

Weitere Merkmale und Vorteile der Erfindung ergeben sich aus der nachfolgenden Beschreibung eines Ausführungsbeispiels der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In den schematischen Zeichnungen sind Ausführungsbeispiele der Erfindung dargestellt und in der nachfolgenden Beschreibung näher erläutert.

Es zeigt:
- Fig. 1: eine Draufsicht auf eine Seite eines erfindungsgemäßen Sägeblatts und
- Fig. 2-6: unterschiedliche Querschnittsformen von erfindungsgemäßen Sägeblättern im Bereich der Vertiefung.

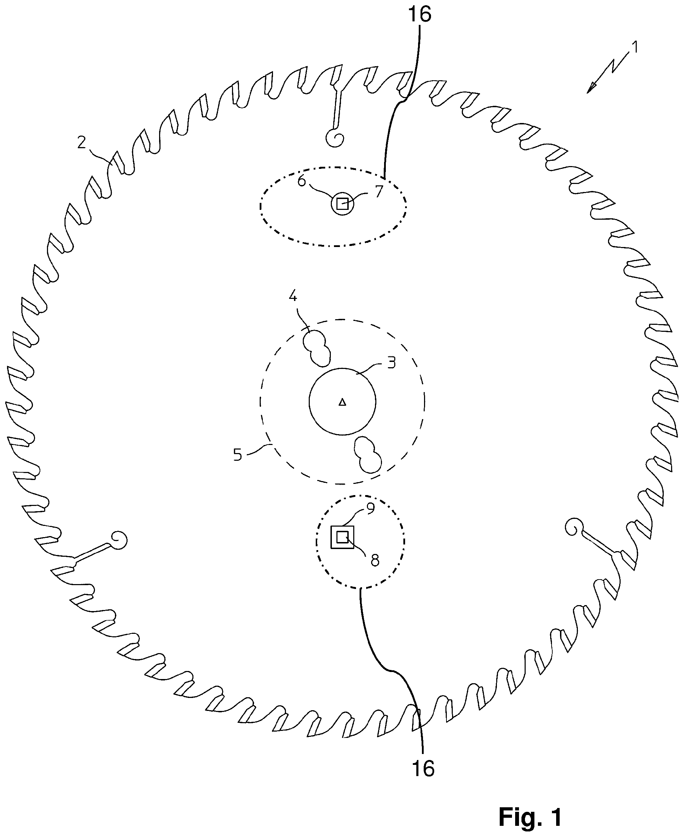

Die Fig. 1 zeigt ein als Kreissägeblatt ausgebildetes Sägeblatt 1, welches an seinem Umfang mehrere Sägezähne 2 aufweist. Das Sägeblatt 1 weist eine zentrale Durchgangsöffnung 3 auf, sowie Bohrungen 4, über die das Sägeblatt 1 an einer Werkzeugmaschine befestigt werden kann.

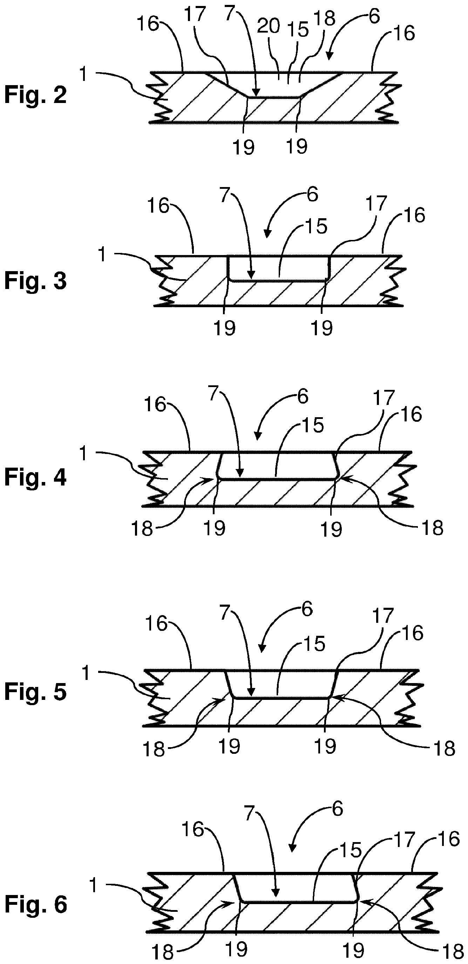

Der Bereich, in dem sich die zentrale Durchgangsöffnung 3 und die Befestigungsbohrungen 4 befinden, wird als Flanschbereich 5 bezeichnet. Weiterhin weist das Sägeblatt 1 eine Ausnehmung bzw. Vertiefung 6 auf, in der ein als eine Codierung 7 ausgebildeter Datenträger angeordnet ist. Im gezeigten Ausführungsbeispiel ist der Querschnitt der Vertiefung 6 kreisrund ausgebildet. Es ist jedoch auch denkbar, eine Vertiefung 9 vorzusehen, deren Querschnitt im Wesentlichen rechteckig oder quadratisch ausgebildet ist, wobei die Ecken abgerundet sein können. Die Vertiefung 9 weist an ihrem Vertiefungsgrund 15 (vgl. Fig. 2 bis 6) einen als eine Codierung 8 ausgebildeten Datenträger auf. Analoge Vertiefungen und Codierungen können auf der gegenüberliegenden Seite des Sägeblatts 1 vorgesehen sein. Im gezeigten Ausführungsbeispiel sind die Vertiefungen 6, 9 außerhalb des Flanschbereichs 5 angeordnet. Grundsätzlich ist es auch denkbar, die Vertiefungen 6, 9 und die Codierungen 7, 8 im Flanschbereich 5 vorzusehen.

Die Figuren 2 bis 6 zeigen unterschiedliche Varianten von Vertiefungen 6, die bei dem Ausführungsbeispiel nach Figur 1 als Vertiefung 6 und/oder als Vertiefung 9 realisiert sein können. Bauteile und Funktionseinheiten, die zu Figur 1 funktionell und/oder konstruktiv gleichartig oder identisch sind, sind mit denselben Bezugszeichen bezeichnet und nicht noch einmal gesondert beschrieben. Die Ausführungen zu Figur 1 gelten daher zu den Figuren 2 bis 6 entsprechend.

Die Figuren 2 bis 6 zeigen jeweils einen Teil des Sägeblattes 1, der beispielhaft die Vertiefung 6 mit der zugehörigen Umgebung in einem Schnitt, der senkrecht zu einer Ebene, die durch das Sägeblatt beschrieben ist, liegt. Die Schnittebene verläuft somit parallel zu einer Rotationsachse des Sägeblatts 1 oder enthält diese.

Die Schnittebene kann hierbei radial oder tangential an einen Umfang oder schräg zu diesen Richtungen ausgerichtet sein. Bei einigen Ausführungsbeispielen ist die Vertiefung 6 symmetrisch ausgebildet, so dass zumindest zwei transversal aufeinander stehende Schnittebenen oder sogar alle Schnittebenen dasselbe Bild ergeben. Bei anderen Ausführungsbeispielen weist die Vertiefung 6 in unterschiedlichen Schnittebenen ein unterschiedliches Bild auf.

Es ist erkennbar, dass die Vertiefung 6 einen Vertiefungsgrund 15 aufweist, auf dem der Datenträger 7 beispielsweise durch Bedruckung, Gravur oder sonstige Oberflächenmodifikation aufgetragen sein kann.

Der Vertiefungsgrund 15 wird begrenzt durch seitliche Ränder 17, die in einem frei wählbaren Winkel angestellt sind. Es ist somit ein tragwandförmiger Übergangsbereich zwischen dem Vertiefungsgrund 15 und einer Oberfläche des Sägeblatts 1 im Bereich der Umgebung 16 ausbildet.

Der Vertiefungsgrund 15 ist so tief angeordnet, dass Bearbeitungswerkzeuge, die zur mechanischen Oberflächenbearbeitung, beispielsweise Schleifen, Polieren und dergleichen, des Sägeblatts 1 in der Umgebung 16 eingesetzt werden, nicht mit dem Vertiefungsgrund 15 oder zumindest dem Datenträger 7, 8 in Kontakt kommen. Dies ermöglicht eine geschützte Anordnung des Datenträgers (Codierung 7, 8) auch im Gebrauch des Sägeblatts.

Zwischen den Rändern 17 und dem Vertiefungsgrund 15 sind Ecken 19 ausgebildet, die beispielsweise scharfkantig (Fig. 2) oder gerundet (Fig. 3 bis 6) ausgeführt sein können. Zwischen Vertiefungsgrund 15 und Rändern 17 können somit gebogene Abschnitte 18 ausgebildet sein.

In Figur 2 ist noch beispielhaft zu sehen, dass die Vertiefung 6 mit einer transparenten Schutzschicht 20 ausgefüllt sein kann. Diese kann auch weggelassen werden, oder die Schutzschicht 20 kann die Vertiefung 6 nur teilweise ausfüllen. Eine derartige Schutzschicht 20 kann auch bei den übrigen Vertiefungen gemäß Fig. 3 bis 6 ausgebildet sein.

Im Einzelnen zeigen Figur 2 und 5 nach oben öffnende Ränder 17, Figur 3 zeigt senkrechte Ränder 17, Figur 4 überhängend angestellte Ränder 17, Figur 6 eine Mischform von Figur 4 und 5.

Die Ränder 17 der Figuren 3 bis 6 bilden jeweils Steilwände, während die Ränder 17 in Figur 2 so flach angestellt sind, dass eine einfache Ausbildung der Vertiefung mit einem Fräsvorgang oder dergleichen möglich ist. Es ist somit auch ein kreisbogenförmig geführter Vertiefungsgrund ausbildbar.

### Bezugszeichenliste

- 1: Sägeblatt
- 2: Sägezahn
- 3: Durchgangsöffnung
- 4: Bohrungen
- 5: Flanschbereich
- 6: Vertiefung
- 7: Codierung, Datenträger
- 8: Codierung, Datenträger
- 9: Vertiefung
- 15: Vertiefungsgrund
- 16: Umgebung
- 17: Rand
- 18: gebogener Abschnitt
- 19: Ecke
- 20: Schutzschicht

## Patentansprüche

1. Sägeblatt (1), insbesondere Kreissägeblatt, mit einem Datenträger, insbesondere einer Codierung (7, 9), **dadurch gekennzeichnet, dass** das Sägeblatt (1) an zumindest einer Seite eine Vertiefung (6, 9) aufweist, welche zur Kompensation einer Unwucht eingebracht wurde, in der der Datenträger (7, 8) angeordnet ist.

2. Sägeblatt (1) nach Anspruch 1, **dadurch gekennzeichnet, dass** die Vertiefung (6, 9) an zumindest einer Stelle eine Tiefe von mindestens 0,2 mm gemessen von der Sägeblattoberseite aufweist und/oder dass die Vertiefung (6, 8) eine Tiefe aufweist, die bei einer mechanischen Flächenbearbeitung, insbesondere einem Polieren, einer Umgebung (16) der Vertiefung (6, 9) einen Kontakt zwischen dem Datenträger (7, 8) und einem bearbeitenden Werkzeug vermeidet.

3. Sägeblatt (1) nach Anspruch 1 oder 2, **dadurch gekennzeichnet, dass** die Vertiefung (6, 9) mit einer vorzugsweise transparenten Abdeckung, insbesondere einer vorzugsweise die Vertiefung (6, 9) ausfüllenden Schutzschicht (20), bedeckt, insbesondere versiegelt, ist.

4. Sägeblatt (1) nach einem der vorhergehenden Ansprüche, **dadurch gekennzeichnet, dass** die Vertiefung (6, 9) einen Querschnitt mit einem gebogenen Abschnitt (18) aufweist.

5. Sägeblatt (1) nach einem der vorhergehenden Ansprüche, **dadurch gekennzeichnet, dass** die Fläche des Querschnitts der Vertiefung (6, 9) höchstens doppelt so groß ist wie die von dem Datenträger (7, 8) beanspruchte Fläche.

6. Sägeblatt (1) nach einem der vorhergehenden Ansprüche, **dadurch gekennzeichnet, dass** die Vertiefung (6, 9) zumindest an ihren in Rotationsrichtung gelegenen Rändern einen tragwandförmigen Übergangsbereich zwischen einem Vertiefungsgrund (15) und einer Oberfläche des Sägeblatts (1) ausbildet und/oder dass die die Vertiefung (6, 9) zumindest an ihren quer zu der oder einer Rotationsrichtung orientierten Rändern (17) eine Steilwand ausbildet.

7. Sägeblatt (1) nach einem der vorhergehenden Ansprüche, **dadurch gekennzeichnet, dass** der Datenträger (7, 8) optisch, insbesondere visuell und/oder optisch codiert, auslesbar ist und/oder dass der Datenträger (7, 8) elektronisch auslesbar und/oder beschreibbar ist.
